# EUROPÄISCHE PATENTANMELDUNG

(11) **EP 1 840 424 A1**
(43) Veröffentlichungstag der Anmeldung: **03.10.2007**
(21) Anmeldenummer: 07006647.7
(22) Anmeldetag: 30.03.2007
(51) Int. Cl.: F16J 15/24

(54) **Kolbenstangendichtring**

(30) Priorität: 30.03.2006 DE 10615327
(71) Anmelder: STASSKOL Kolbenstangendichtungen GmbH, 39418 Staßfurt (DE)
(72) Erfinder: Schmidt, Gerhard, 39122 Magdeburg (DE); Borchardt, Thomas, 38820 Halberstadt (DE)
(74) Vertreter: Fuchs

(57) **Zusammenfassung**

Es wird ein Kolbenstangendichtring (1) mit mindestens zwei in Umfangsrichtung aneinander angrenzenden Ringsegmenten (2) beschrieben, wobei in zusammengesetztem Zustand der Ringsegmente (2) auf der inneren Mantelfläche (3) eine innere Nut (4) auf einer Seitenfläche (7) mindestens ein radial ausgerichteter Strömungskanal (8) ausgebildet ist, welcher in die innere Nut (4) mündet.

Der Erfindung liegt die Aufgabe zugrunde, einen Kolbenstangendichtring (1) derart weiterzubilden, dass sich während des Betriebes ein annähernd gleicher Verschleiß mehrerer auf der Kolbenstange angeordneter Kolbenstangendichtringe (1) einstellt.

Die Aufgabe wird unter anderem dadurch gelöst, dass die innere Mantelfläche (3) beidseitig der inneren Nut (4) eine Stützkante (9) und eine Dichtkante (10) aufweist, wobei die Stützkante (9) von dem mindestens einen Strömungskanal (8) durchbrochen ist und eine plane Stützfläche (9a) aufweist.

## Beschreibung

Die Erfindung betrifft einen Kolbenstangendichtring mit mindestens zwei in Umfangsrichtung aneinander angrenzenden Ringsegmenten, wobei in zusammengesetztem Zustand der Ringsegmente auf der inneren Mantelfläche eine innere Nut und auf einer Seitenfläche mindestens ein radial ausgerichteter Strömungskanal ausgebildet ist, welcher in die innere Nut mündet. Darüber hinaus bezieht sich die Erfindung auf eine Anordnung mehrerer Kolbenstangendichtringe in einem Kolbenkompressor.

Derartige Kolbenstangendichtringe kommen insbesondere in Kolbenkompressoren zur Verdichtung von Gasen zum Einsatz und dienen der Abdichtung einer Druckdifferenz zwischen einer Hochdruck- und einer Niederdruckseite des Systems. Häufig werden dabei auch so genannte Trockenlaufsysteme eingesetzt, bei denen auf eine Fremdschmierung zum Beispiel mit Öl verzichtet wird und die Abdichtung auf einer trockenen Reibung zwischen dem Kolbenstangendichtring und der Kolbenstange basiert.

Als Materialien haben sich für Kolbenstangendichtringe hauptsächlich Kunststoffe, beispielsweise aus gefüllten Polymeren, durchgesetzt. Ein häufig verwendetes Polymer-Material ist beispielsweise Polytetrafluorethylen (PTFE). In die PTFE Matrix werden Füllstoffe wie amorpher Kohlenstoff, Grafit, Glasfasern, Metalle, Keramik oder Fettschmierstoffe eingebracht.

Zur Erhöhung der Standzeit werden üblicherweise mehrere Kolbenstangendichtringe, meistens zwei, in axialer Richtung hintereinander angeordnet und bilden einen Dichtelementsatz, der auch als Packung bezeichnet wird.

Die maximale Standzeit, die eine solche Packung im Dauerbetrieb standhalten kann, ist in erster Linie nicht durch die Anzahl der Dichtelemente einer Packung bestimmt, sondern durch die Verschleißbeständigkeit eines einzelnen Dichtelementes beziehungsweise der einzelnen Kolbenstangendichtringe. Es ist beispielsweise aus der WO 98/55783 bekannt, zur Erhöhung der Standzeit segmentierte Dichtringe mit mindestens zwei Ringsegmenten zu verwenden, die über eine in einer äußeren Ringnut eingelegte umlaufende Schlauchfeder zusammengehalten und dadurch mit einer Vorspannung gegen die Kolbenstange gedrückt werden. Die Schnittlinien der Ringsegmente sollen schräg tangential durch den Kolbenstangendichtring verlaufen. Die bekannte Druckschrift beschreibt auch den Effekt, dass die Verteilung der abzudichtenden Druckdifferenz auf die verschiedenen Dichtelemente des Dichtelementsatzes üblicherweise nicht gleichmäßig ist. In der Praxis könne der realistische Extremfall sogar so aussehen, dass die gesamte Druckdifferenz im wesentlichen nur durch das der Druckseite am nächsten liegende Dichtelement abgedichtet wird, solange, bis dieses verschlissen ist und das dahinter liegende Dichtelement beansprucht wird.

Hinsichtlich des Materialverschleißes von Kolbenstangendichtringen wurden bereits Untersuchungen durchgeführt und unterschiedliche alternative Formgebungen der Kolbenstangendichtringe entwickelt. Einen Überblick darüber gibt die im Juni 2005 publizierte Veröffentlichung "Service Life Improvement of Piston-Rod Sealing Systems by Means of Pressure-Relieved Sealing Elements" von Dr. Norbert Feistel. Der Veröffentlichung ist zu entnehmen, dass eine besonders niedrige Verschleißrate erreicht wird, wenn eine Seitenfläche mit zueinander beabstandeten Blöcken versehen ist und diese auf ihrer inneren Mantelfläche eine Nut aufweisen. Auch wenn die Verschleißrate dieser Kolbenstangendichtringe erheblich reduziert werden konnte, besteht nach wie vor die Problematik eines unterschiedlich starken Verschleißes der Kolbenstangendichtringe, welcher zu kurzen Wartungsintervallen und hohen Betriebskosten führt.

Aus diesem Grund liegt der Erfindung die Aufgabe zugrunde, einen Kolbenstangendichtring derart weiterzubilden, dass sich während des Betriebes ein annähernd gleicher Verschleiß mehrerer auf der Kolbenstange angeordneter Kolbenstangendichtringe einstellt.

Die Aufgabe wird erfindungsgemäß mit einem Kolbenstangendichtring gelöst, bei dem die innere Mantelfläche beidseitig der inneren Nut eine Stützkante und eine Dichtkante aufweist, wobei die Stützkante von dem mindestens einen Strömungskanal durchbrochen ist und eine plane Stützfläche aufweist. Unter einer planen Stützfläche wird eine parallele Ausrichtung zu einer Kolbenstange verstanden. Somit ist die Stützfläche in axialer Richtung zylindrisch ausgeformt.

Durch die Strömungskanäle wird einerseits das unter Druck stehende Fluid nach außen geleitet und gelangt dort auf die äußere Mantelfläche. Dort baut sich ein in radialer Richtung nach innen wirkender Anpressdruck auf die Ringsegmente auf, welcher zu einer zusätzlichen Abdichtung aber auch zu einem erheblichen Verschleiß führt. Aufgrund der Verbindung des mindestens einen Strömungskanals mit der äußeren Mantelfläche, fließt ein Teilstrom des Verdichtungsmediums auch in die innere Nut und baut dort ebenfalls einen in Richtung der äußeren Mantelfläche gerichteten Gegendruck auf, wodurch sich der effektiv auf die Kolbenstange wirkende Anpressdruck erheblich reduziert und dadurch ein beabsichtigter Leckverlust an dem ersten Kolbenstangendichtring stattfindet. Dieser Leckverlust führt zu einem Druckaufbau vor dem jeweils dahinter befindlichen Kolbenstangendichtring, so dass dieser ebenfalls an der Abdichtung der Kolbenstange von Beginn an beteiligt ist und in gleichem Maße verschleißt.

Dabei stehen sowohl die Stützkante als auch die Dichtkante in Kontakt mit der Kolbenstange. Aufgrund der axial zueinander beabstandeten Kanten erfolgt eine in axialer Richtung doppelte Abstützung der Kolbenstange und somit stets ein Fortbestehen der inneren Nut, so dass auch nach einer längeren Betriebszeit noch der vorgesehene Leckverlust erhalten bleibt.

Da die Stütz- und Dichtkante beide jeweils eine Stützfläche aufweisen, mit welcher ein flächenartiger Kontakt zu einer Kolbenstange möglich ist, bleibt diese doppelte Abstützung auch nach einer längeren Betriebszeit weit gehend erhalten. Beide Kanten entfernen insbesondere auf der Kolbenstange befindlichen Abrieb, wodurch ein Zusetzen der inneren Nut mit Abriebpartikeln oder Schmierstoff vermieden wird.

Ein weiterer positiver Effekt der inneren Nut besteht darin, dass die Kontaktfläche in axialer Richtung auf die beiden Kanten reduziert und die Temperaturentwicklung im Übergangsbereich Kolbenstange/Kolbenstangendichtring erheblich gesenkt wird, wodurch sich die Standzeit des Kolbenstangendichtrings zusätzlich erhöht.

Die innere Nut bewirkt außer dem Aufbau eines Gegendrucks eine Kühlung der beiden Kanten. Die innere Nut sollte in axialer Richtung mittig in der inneren Mantelfläche angeordnet sein, so dass beide Kanten eine gleiche Breite aufweisen. Dieses bewirkt einen weit gehend gleichen Verschleiß des Kolbenstangendichtrings selbst.

Jeder Strömungskanal kann auf der Oberfläche einer Seitenfläche verlaufen und in axialer Richtung außermittig in die innere Nut münden. Hieraus resultiert ein besonders günstiger Strömungseintritt in die innere Nut, verbunden mit einem entsprechenden Aufbau eines Gegendrucks.

Gemäß einer vorteilhaften Ausführungsform ist auf der äußeren Mantelfläche eine äußere Nut ausgebildet, wobei die innere Nut und die äußere Nut über den mindestens einen Strömungskanal miteinander verbunden sind. In der äußeren Nut kann ein umlaufendes, auf Zug beanspruchtes Federelement eingelegt sein, mit welchem die Ringsegmente elastisch zusammengehalten sind. Die äußere Nut sorgt außerdem für einen günstigen Zufluss des Verdichtungsmediums in den mindestens einen Strömungskanal.

Vorzugsweise mündet der mindestens eine Strömungskanal in axialer Richtung versetzt in die innere Nut. Besonders bevorzugt liegen dabei der Strömungskanal und die innere Nut in unterschiedlichen Ebenen, wobei die Oberkante der Nut dem Tiefsten des mindestens einen Strömungskanals entspricht.

Es hat sich als besonders günstig erwiesen, wenn im Neuzustand, das heißt vor der ersten Benutzung, die Dichtkante radial gegenüber der Stützkante um 0,5 mm bis 1,5 mm nach innen vorsteht. Dieser Überstand verschleißt in der Einlaufphase und erzeugt einen so genannten Transferfilm, welcher die Rauhigkeit der Kolbenstange ausfüllt und somit auch zu einem geringeren Reibwert beiträgt, da bereits in der Einlaufphase das Material der Dichtkante abgetragen wird und sich auf die Kolbenstange legt.

Die Ringsegmente des Kolbenstangendichtrings können auch Stützflächen aufweisen, welche sich in zusammengesetztem Zustand gegenseitig überlappen. Hieraus resultiert der Vorteil, dass kein unkontrollierter axialer Durchtritt des Verdichtungsmediums durch den Kolbenstangendichtring möglich ist.

Vorzugsweise umfassen die Ringsegmente vordere Stützelemente und hintere Vorspannelemente, wobei in zusammengesetztem Zustand die Vorspannelemente in die Stützelemente eingesetzt sein können. Dabei verläuft ein in die äußere Nut einlegbares Federelement, beispielsweise eine Schlauchfeder oder ein Spannring, sowohl über die Stützelemente als auch die Vorspannelemente und hält diese aufgrund der Verspannung des Federelementes zusammen. Mit zunehmendem Verschleiß von Stütz- und Dichtkante wandern die Stützelemente aufgrund des Gasdrucks zusammen.

Gemäß einer besonderen Ausführungsform weist das Vorspannelement und das Stützelement jeweils zwei, komplementär geneigte Gleitkanten auf, wobei beide Gleitkanten günstigerweise eine in radialer Richtung nach innen zulaufende Keilform bilden. Die Flanken der Keilform können dabei unter einem Winkel α zwischen 1 ° und 10°, besonders bevorzugt 5° gegenüber einer senkrechten Achse zulaufen, um zu gewährleisten, dass bei einem zunehmenden Verschleiß nach wie vor alle Ringsegmente am Verschleiß teilnehmen. Bei radial verlaufenden Gleitkanten würde es zu keiner radialen Relativbewegung zwischen dem Vorspannelement und dem Stützelement kommen, so dass nach einer gewissen Einlaufzeit kein Andruck mehr an die Kolbenstange und somit keine Dichtwirkung erzeugt wird. Folglich würde es dabei auch zu keinem weiteren Verschleiß aller Ringsegmente kommen. Bei einem negativen Winkel würden die Stützelemente gegenüber den Vorspannelementen zurückweichen und wären dann nicht mehr am Verschleiß beteiligt. Die Wahl des Winkels der Gleitkanten nimmt demzufolge wesentlich Einfluss auf den gleichmäßigen Verschleiß des Kolbenstangendichtrings.

Vorzugsweise ist die innere Mantelfläche durch die Stützelemente und die Vorspannelemente gebildet, wobei die Stützkante ausschließlich aus Stützelementen und die Dichtkante aus Stützelementen und Vorspannelementen gebildet wird. Bei dieser Ausführungsform sind die Übergänge von Stützelementen und Vorspannelementen mit besonders großflächigen Stützflächen ausgebildet, die ein Überlappen von Stützelementen und Vorspannelementen ermöglichen und einen unkontrollierten Durchgang des Verdichtungsmediums in axialer Richtung durch den Kolbenstangendichtring verhindern.

Vorteilhafterweise ist in jedem Stützelement jeweils ein Strömungskanal angeordnet, so dass die Strömungskanäle in Umfangsrichtung gleichmäßig um den Kolbenstangendichtring verteilt sind und für einen gleichmäßigen Druckausgleich sorgen. Darüber hinaus lassen sich die Ringsegmente standardisiert besonders günstig herstellen.

Eine Teilaufgabe wird mit einer Anordnung mehrerer Kolbenstangendichtringe in einem Kolbenkompressor gelöst, bei der die Koibenstangendichtringe axial zueinander beabstandet und mit ihrer inneren Mantelfläche in dichtendem Kontakt zu einer Kolbenstange bringbar sind. Die Kolbenstangenringe weisen jeweils ein Entlastungsnutensystem auf. Erfindungsgemäß umfasst das Entlastungsnutensystem eine in der inneren Mantelfläche angeordnete innere Nut, wobei die innere Nut durch eine Stützkante und eine Dichtkante begrenzt ist, wobei die Stützkante von mindestens einem radial verlaufenden Strömungskanal durchbrochen ist und eine plane Stützfläche aufweist. Mittels des Entlastungsnutensystems ist eine vorgebbare Leckage zwischen jedem Kolbenstangendichtring und der Kolbenstange vorgesehen.

Besonders günstig ist es, wenn ein einziger Kolbenstangendichtring als Dichtelement ausbildet ist, das heißt ohne einen zweiten üblicherweise verwendeten Deckring. Der erfindungsgemäße Kolbenstangendichtring vereint in einem Bauteil die bisher aus Dichtring und Deckring bestehenden Dichtelemente, wodurch Bauraum und Fertigungskosten verringert werden.

Aufgrund der kürzeren axialen Baulänge des Kolbenstangendichtrings gegenüber bekannten Dichtelementen, verkürzt sich die Verweilzeit der heißen Kolbenstange in dem Dichtelement, wodurch die Temperaturbelastung verringert wird. Dieses wiederum führt zu einer geringeren Belastung der Kolbenstangendichtringe und somit zu einer höheren Standzeit.

Gleichzeitig wird durch die Reduzierung der Anzahl der Dichtringe und somit der Dichtstrecke in axialer Richtung die Belastung der Kolbenstange reduziert, wodurch auch eine geringere Reibwärme in die Kolbenstange eingebracht wird und die Kolbenstange im Betrieb eine verringerte Kolbenstangentemperatur aufweist. Dieses erhöht zusätzlich die Standzeit der Kolbenstangendichtringe.

Die Reduzierung der Dichtstrecke in axialer Richtung sorgt außerdem dafür, dass es zu einer gleichmäßigen Druckverteilung innerhalb des gesamten Packungssatzes kommt, wodurch wiederum eine Überlastung eines einzelnen Kolbenstangendichtringes in Folge einer zu hohen Dichtigkeit reduziert wird.

Zum besseren Verständnis wird die Erfindung nachfolgend anhand von 5 Figuren näher erläutert. Es zeigen die:
- **Fig. 1:**: eine dreidimensionale Vorderansicht auf einen zusammengesetzten Kolbenstangendichtring;
- **Fig. 2:**: eine dreidimensionale Ansicht auf eine Schlauchfeder, Stützelemente und Vorspannelemente;
- **Fig. 3:**: eine Vorderansicht auf einen zusammengesetzten Kolbenstangendichtring;
- **Fig. 4:**: einen Querschnitt längs der Schnittebene A:A in Figur 3 und
- **Fig. 5:**: eine Rückansicht auf einen zusammengesetzten Kolbenstangendichtring.

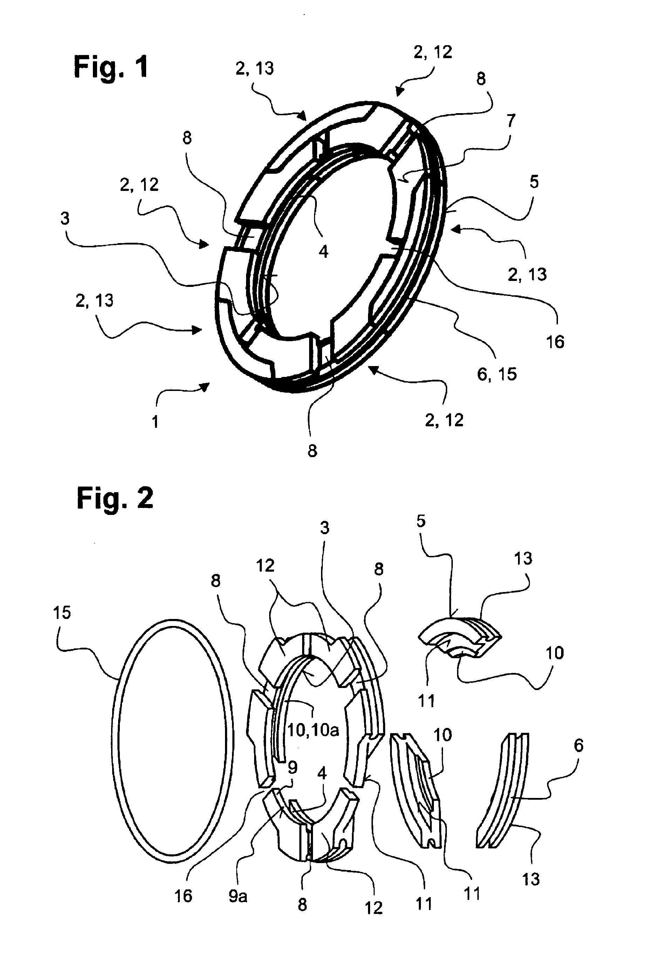

Die Figur 1 zeigt eine perspektivische Draufsicht auf einen aus sechs Ringsegmenten 2 zusammengesetzten Kolbenstangendichtring 1. Auf der sichtbaren Seitenfläche 7 bilden insgesamt drei Stützelemente 12 einen Vollkreis, der lediglich in Umfangsrichtung zwischen den Stützelementen 12 durch Stoßspiele 16 unterbrochen ist. Die Stützelemente 12 weisen jeweils einen radial ausgerichteten Strömungskanal 8 auf, der das Stützelement 12 in radialer Richtung vollständig durchsetzt und im Bereich einer inneren Mantelfläche 3 in eine darin umlaufende innere Nut 4 mündet. Die innere Nut 4 ist ringförmig, in sich geschlossen ausgebildet und wird nachfolgend als Ringnut 4 angesprochen.

Abwechselnd zwischen zwei Stützelemente 12 befinden sich Vorspannelemente 13, die ebenfalls einen Teil der inneren Mantelfläche 3 bilden, wobei die Vorspannelemente 13 in der perspektivischen Vorderansicht jedoch weitgehend durch die Stützelemente 12 abgedeckt sind. Auf der inneren Mantelfläche 3 verläuft die innere Ringnut 4 sowohl durch die Stützelemente 12 als auch durch die Vorspannelemente 13 mit einem in Umfangsrichtung konstanten rechteckigen Querschnitt.

Auf einer äußeren Mantelfläche 5 ist ebenfalls eine äußere Ringnut 6 angeordnet, die ebenfalls durch die Stützelemente 12 und die Vorspannelemente 13 mit einem gerundeten Querschnitt verläuft. In die äußere Ringnut 6 ist eine mit Zugspannung vorgespannte Schlauchfeder 15 eingelegt, welche die Ringsegmente 2 in eine durchmesserkleine Stellung zusammenzieht und die innere Mantelfläche 3 dadurch gegen eine nicht gezeigte Kolbenstange drückt. Diese äußere Ringnut 6 ist ebenfalls mit den Strömungskanälen 8 verbunden, so dass ein Strömungsaustausch zwischen der äußeren Ringnut 6 und der inneren Ringnut 4 über die Strömungskanäle 8 möglich ist.

In der Figur 2 sind die wesentlichen Komponenten des Kolbenstangendichtrings 1 versprengt dargestellt. Hierbei wird insbesondere deutlich, dass die innere Ringnut 4 durch eine Stützkante 9 und eine Dichtkante 10 seitlich begrenzt ist. Aufgrund der in axialer Richtung mittigen Anordnung der Ringnut 4 in der Mantelfläche 3 haben die Stützkante 9 und die Dichtkante 10 ungefähr die gleiche Breite. Sowohl die Stützkante 9 als auch die Dichtkante 10 weisen jeweils eine Stützfläche 9a, 10a auf, welche in eingebautem Zustand jeweils in flächigem Kontakt mit einer nicht gezeigten Kolbenstange stehen. Die Tiefe der Stützkante 9 in axialer Richtung entspricht der Tiefe der drei Strömungskanäle 8, so dass im Übergangsbereich der Strömungskanäle 8 in die Ringnut 4 die Stützkante 9 fehlt und eine Stufe zum Nuttiefsten erkennbar ist. Der Übergang der Strömungskanäle 8 in die äußere Ringnut 6 entspricht konstruktiv dem Übergang in die innere Ringnut 4, das heißt auch hier ist die die äußere Ringnut 6 begrenzende Wand unterbrochen und zwischen Strömungskanal 8 und Nuttiefsten eine Stufe ausgebildet.

Die Dichtkante 10 ist sowohl durch die Stützelemente 12 als auch die Vorspannelemente 13 gebildet und weist keine Unterbrechungen auf, so dass die nicht gezeigte Kolbenstange auf ihrem gesamten Umfang in Wirkkontakt mit der Dichtkante 10 steht.

Alle Kontaktflächen zwischen dem Stützelement 12 und dem Vorspannelement 13 sind mittels Stützflächen 11 überlappend ausgeformt. Unter einer überlappenden Anordnung wird verstanden, dass sich hinter einer Stützfläche 11 des vorderen Stützelementes 12 stets noch eine dahinter liegende weitere Stützfläche 11 des Vorspannelementes 13 befindet. Dadurch ist unabhängig von der relativen verschleißbedingten Stellung von Stützelement 12 und Vorspannelement 13 kein Durchtritt des Verdichtungsmediums in axialer Richtung durch den Kolbenstangendichtring 1 möglich.

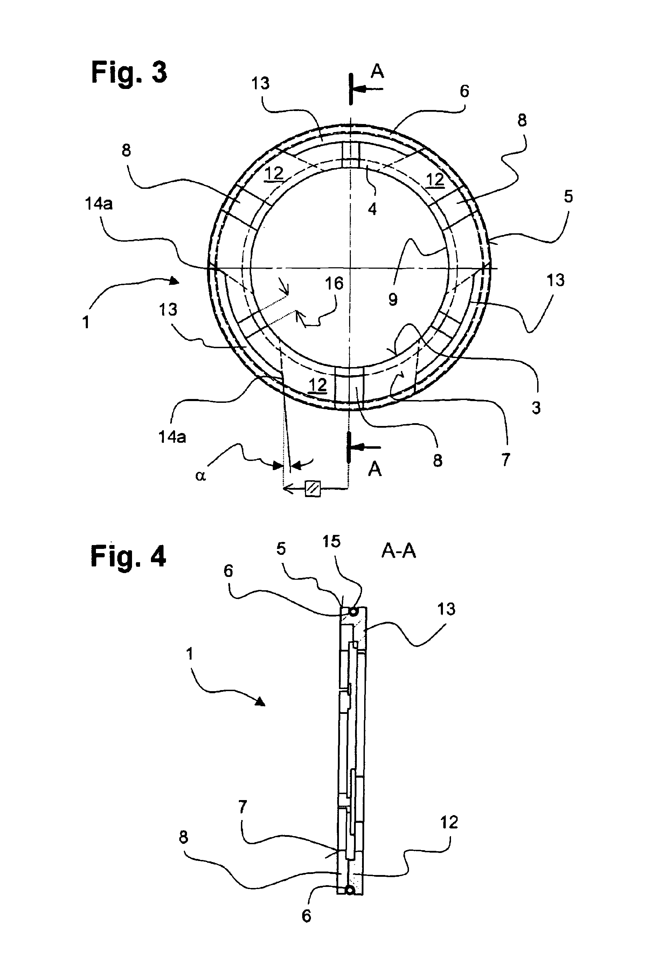

Die Figur 3 zeigt eine Vorderansicht des Kolbenstangendichtrings 1, wobei die Stützelemente 12 durch die Vorspannelemente 13 auseinandergedrückt sind. Die Stützelemente 12 sind auf der Seitenfläche 7 entsprechend des Stoßspiels 16 zueinander beabstandet. Mit zunehmendem Verschleiß verringern sich die radialen Höhen der Stützelemente 12 durch einen Abtrag der Stützkante 9 und der in Figur 3 nicht sichtbaren Dichtkante 10. Aufgrund der schräg stehenden vorderen Gleitkanten 14a und der hier nicht sichtbaren aber identisch geneigten Gleitkanten 14b erfolgt über die Schlauchfeder 15 (siehe Figur 4) ein Zusammenziehen sowohl der Stützelemente 12 als auch der Vorspannelemente 13 und dadurch ein Andruck des gesamten Kolbenstangendichtrings 1 an die Kolbenstange. Wie der Figur 3 zu entnehmen ist, sind die Gleitkanten 14a entsprechend eines Winkels α um ca. 5° geneigt. Der Winkel α ist durch die Neigung der Gleitkante 14a gegenüber der senkrecht stehenden Mittelachse definiert.

Die Figur 4 zeigt einen Querschnitt längs der Schnittlinie A-A in Figur 3, wobei insbesondere die offene Verbindung der äußeren Ringnut 6 mit einem der Strömungskanäle 8 deutlich wird. In axialer Richtung weist der zusammengesetzte Kolbenstangendichtring 1 auf der der Seitenfläche 7 gegenüberliegenden Seite eine vollständig plane Oberfläche auf. Des Weiteren ist erkennbar, dass die Schlauchfeder 15 vollständig von dem äußeren Ringkanal 6 aufgenommen ist und nicht nach außen übersteht.

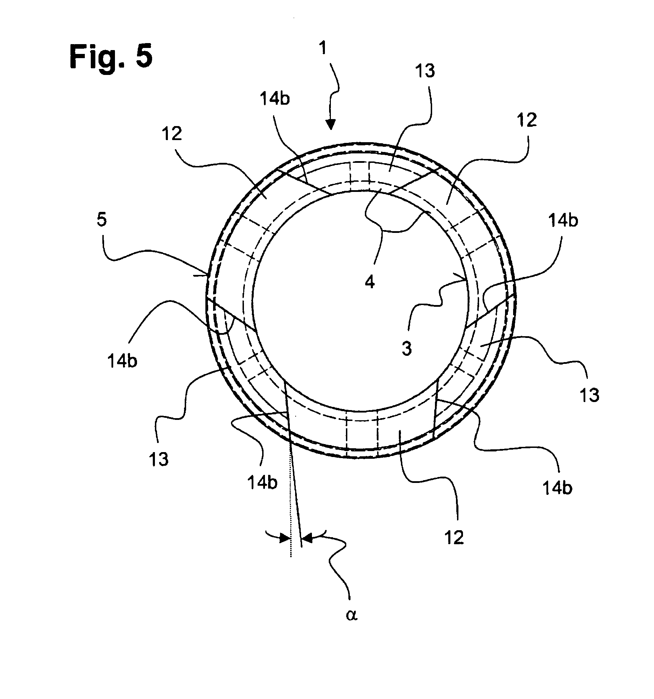

Die Figur 5 zeigt eine Rückansicht auf den Kolbenstangendichtring 1, wobei die Gleitflächen 14b vollständig diese durchlaufen und für eine Trennung der Stützelemente 12 und der Vorspannelemente 13 sorgen. Dabei sind die Gleitflächen 14b ebenfalls entsprechend des Winkels α geneigt. Die unterschiedliche radiale Erstreckung der Gleitflächen 14a und 14b ermöglicht das Ausformen weit gehend horizontaler Stützflächen 11 (siehe Figur 2) mit entsprechenden Überlappungen der Stützelemente 12 und Vorspannelemente 13.

### Bezugszeichenliste

- 1: Kolbenstangendichtring
- 2: Ringsegmente
- 3: innere Mantelfläche
- 4: innere Nut, innere Ringnut
- 5: äußere Mantelfläche
- 6: äußere Nut, äußere Ringnut
- 7: Seitenfläche
- 8: Strömungskanal
- 9: Stützkante
- 9a: plane Stützfläche Stützkante
- 10: Dichtkante
- 10a: plane Stützfläche Dichtkante
- 11: Stützflächen
- 12: Stützelemente
- 13: Vorspannelemente
- 14a: vordere Gleitkanten
- 14b: hintere Gleitkanten
- 15: Federelement, Schlauchfeder
- 16: Stoßspiel
- α: Winkel Gleitkanten

## Patentansprüche

1. Kolbenstangendichtring (1) mit mindestens zwei in Umfangsrichtung aneinander angrenzenden Ringsegmenten (2), wobei in zusammengesetztem Zustand der Ringsegmente (2)
- auf der inneren Mantelfläche (3) eine innere Nut (4) und
- auf einer Seitenfläche (7) mindestens ein radial ausgerichteter Strömungskanal (8) ausgebildet ist, welcher in die innere Nut (4) mündet,
**dadurch gekennzeichnet,**
**dass** die innere Mantelfläche (3) beidseitig der inneren Nut (4) eine Stützkante (9) und eine Dichtkante (10) aufweist, wobei die Stützkante (9) von dem mindestens einen Strömungskanal (8) durchbrochen ist und eine plane Stützfläche (9a) aufweist.

2. Kolbenstangendichtring (1) nach Anspruch 1, **dadurch gekennzeichnet, dass** auf der äußeren Mantelfläche (5) eine äußere Nut (6) ausgebildet ist, wobei die innere Nut (4) und die äußere Nut (6) über den mindestens einen Strömungskanal (8) miteinander verbunden sind.

3. Kolbenstangendichtring (1) nach Anspruch 1 oder 2, **dadurch gekennzeichnet, dass** der mindestens eine Strömungskanal (8) in axialer Richtung versetzt in die innere Nut (4) mündet.

4. Kolbenstangendichtring (1) nach einem der Ansprüche 1 bis 3, **dadurch gekennzeichnet, dass** die Dichtkante (10) im Neuzustand radial gegenüber der Stützkante (9) um 0,5 mm bis 1,5 mm nach innen vorsteht.

5. Kolbenstangendichtring (1) nach einem der Ansprüche 1 bis 4, **dadurch gekennzeichnet, dass** die Ringsegmente (2) Stützflächen (11) aufweisen, welche sich in zusammengesetztem Zustand gegenseitig überlappen.

6. Kolbenstangendichtring (1) nach einem der Ansprüche 1 bis 5, **dadurch gekennzeichnet, dass** die Ringsegmente (2) vordere Stützelemente (12) und hintere Vorspannelemente (13) umfassen, wobei in zusammengesetztem Zustand die Vorspannelemente (13) in die Stützelemente (12) eingesetzt sind.

7. Kolbenstangendichtring (1) nach Anspruch 6, **dadurch gekennzeichnet, dass** das Vorspannelement (13) zwischen zwei benachbarte Stützelemente (12) eingesetzt ist.

8. Kolbenstangendichtring (1) nach Anspruch 6 oder 7, **dadurch gekennzeichnet, dass** das Vorspannelement (13) und das Stützelement (12) jeweils zwei komplementär geneigte Gleitkanten (14a, 14b) aufweist.

9. Kolbenstangendichtring (1) nach Anspruch 8, **dadurch gekennzeichnet, dass** beide Gleitkanten (14a, 14b) des Vorspannelementes (13) eine Keilform bilden.

10. Kolbenstangendichtring (1) nach Anspruch 9, **dadurch gekennzeichnet, dass** die Flanken der Keilform unter einem Winkel (α) zwischen 1° und 10°, besonders bevorzugt 5° zulaufen.

11. Kolbenstangendichtring (1) nach einem der Ansprüche 6 bis 10, **dadurch gekennzeichnet, dass** die innere Mantelfläche (3) durch die Stützelemente (12) und die Vorspannelemente (13) gebildet ist, wobei die Stützkante (9) ausschließlich aus Stützelementen (12) und die Dichtkante (10) aus Stützelementen (12) und Vorspannelementen (13) ausgeformt ist.

12. Kolbenstangendichtring (1) nach einem der Ansprüche 6 bis 11, **dadurch gekennzeichnet, dass** in jedem Stützelement (12) jeweils ein Strömungskanal (8) angeordnet ist.

13. Anordnung mehrerer Kolbenstangendichtringe (1) nach einem der Ansprüche 1 bis 12 in einem Kolbenkompressor, wobei die Kolbenstangendichtringe (1) axial zueinander beabstandet und mit ihrer inneren Mantelfläche (3) in dichtendem Kontakt zu einer Kolbenstange bringbar sind und jeweils ein Entlastungsnutensystem aufweisen,
**dadurch gekennzeichnet,**
**dass** das Entlastungsnutensystem eine in der inneren Mantelfläche angeordnete innere Nut (4) umfasst, wobei die innere Nut (4) durch eine Stützkante (9) und eine Dichtkante (10) begrenzt ist, wobei die Stützkante (9) von mindestens einem radial verlaufenden Strömungskanal (8) durchbrochen ist und eine plane Stützfläche (9a) aufweist.

14. Anordnung nach Anspruch 13, **dadurch gekennzeichnet, dass** ein einziger Kolbenstangendichtring (1) als Dichtelement ausbildet ist.

15. Anordnung nach Anspruch 13 oder 14, **dadurch gekennzeichnet, dass** in dem Kolbenkompressor der Strömungskanal (8) auf der druckzugewandten Seite (7) ausgerichtet ist.
